# EUROPÄISCHE PATENTANMELDUNG

(11) **EP 2 051 470 A1**
(43) Veröffentlichungstag der Anmeldung: **22.04.2009**
(21) Anmeldenummer: 07020293.2
(22) Anmeldetag: 17.10.2007
(51) Int. Cl.: H04L 29/06

(54) **Verfahren zur Konfiguration der Sicherheitsparamter von Drahtlosnetzwerken**

(71) Anmelder: Sphairon Access Systems GmbH, 02625 Bautzen (DE)
(72) Erfinder: Löser, Klaus-Peter, 90562 Heroldsberg (DE); Kawczyk, Jost, 02708 Löbau (DE); Gladitz, Detlef, 90491 Nürnberg (DE); Kraushaar, Jens, 01069 Dresden (DE)
(74) Vertreter: Lippert, Stachow & Partner

(57) **Zusammenfassung**

Die Erfindung betrifft ein Verfahren zum Zugang zu und zur Verschlüsselung von Netzwerken, insbesondere von Drahtlosnetzwerken (MLAN's). Durch die Erfindung soll ein Verfahren zum Zugang zu und zur Verschlüsselung von (Drahtlos-) Netzwerken geschaffen werden, das mit geringem Aufwand eine deutlich verbesserte Bedienbarkeit gewährleistet und eine hohe Sicherheit für das Netzwerk bietet. Erreicht wird das durch Festlegen eines individuellen komplexen Schlüssels (bestehend aus Netzwerkkennung und/oder Passwort), Einprogrammieren dieses Schlüssels in der Router-Hardware, Speichern des Schlüssels auf einem individualisierten Datenträger, der zugleich die Installationssoftware für den (W)LAN-Client beinhaltet, und automatische Übernahme des im individualisierten Datenträger gespeicherten Schlüssels in die Netzwerkeinstellungen des Client-Rechners.

## Beschreibung

Die Erfindung betrifft ein Verfahren zum Zugang zu und zur Verschlüsselung von Netzwerken, insbesondere von Drahtlosnetzwerken (WLAN's).

Netzwerke bestehen aus den Komponenten, Netzwerkmedium (bei Drahtlosnetzen durch Funkübertragung), einem oder mehreren Clients (bei Drahtlosnetzen: WLAN-Clients), die über das Netzwerkmedium mit dem Access Point verbunden werden, sowie einem Router (bei Drahtlosnetzwerken: WLAN-Router), der das Verbindungsprotokoll und das Routing der Informationen zwischen den Clients (im LAN) und/oder dem Wide Area Network (WAN) realisiert. WLAN steht dabei für Wireless Local Access Network.

Als Netzwerkmedium kommen LAN-Kabel oder die Funkstrecke (bei WLAN) zum Einsatz. Bei den Clients handelt sich um Arbeitsplatzcomputer mit entsprechenden Einbaukomponenten, wie LAN- oder WLAN-Karte.

Die Installation eines Netzwerkes umfasst (mindestens) die Schritte der elektrischen Installation und Konfiguration des Routers, der Installation und/oder Aktivierung des Netzwerkmediums, der Installation und/oder Aktivierung der Netzwerk-Hardware auf den Clients, der Installation der Zugangssoftware auf den Clients, der Konfiguration der Zugangsrechte der Clients auf das Netzwerk und bei WLAN Netzwerken die Konfiguration der Verschlüsselung des Netzwerkverkehrs.

Die Zugangssoftware wird üblicherweise vom Gerätehersteller auf einem geeigneten Massenspeicher, wie einer Installations-CD, einem USB-Stick oder einem anderen Speicher, wie einer SD- Karte o.ä., geliefert. In einigen Fällen verfügt das Betriebssystem des Clients bereits selbst über einen passenden Treiber.

Die Konfiguration der Zugangsrechte und die Verschlüsselung erfolgt in der Regel manuell durch Eingabe individueller Schlüssel auf dem Client. Dieser Schlüssel ist bei (WLAN-) Routern meist eine voreingestellte Zahlen/Buchstaben-Kombination, welche vom Gerät oder dessen Dokumentation abzulesen und in den Treiber bzw. in das Betriebssystem des Clients einzugeben ist.

Diese Eingabe ist deutlich unkomfortabel, mit erheblichem Zeitaufwand verbunden und auch fehlerträchtig.

Darüber hinaus besteht die an sich verständliche Tendenz, komplexe, sichere Schlüssel durch leicht zu merkende, unsichere Schlüssel zu ersetzen, was die Abhörsicherheit des Netzwerkes drastisch senkt.

Die bisher bekannten Verfahren, die den Netzwerkschlüssel auf elektronischem Wege übertragen und damit darauf abzielen, die manuelle Eingabe zu vermeiden, weisen die nachfolgend aufgezeigten Nachteile auf.

Ein kurzzeitiges "Öffnen" des Netzwerks wie bei WPS, um den Schlüssel vom (WLAN-) Router über das dann unverschlüsselte Netzwerk zum Client zu übertragen, stellt einerseits ein (temporäres) Sicherheitsrisiko dar, andererseits sind weiterhin Aktivitäten des Nutzers erforderlich (Drücken einer Taste an Router und Client zum synchronen "Öffnen" des Netzwerkes).

Aktuelle herstellerspezifische Lösungen, die den Transfer der Verschlüsselungsdaten über ein Speichermedium ermöglichen, erzwingen den Einsatz proprietärer Hardware, die ggf. redundant zu bereits vorhandener Hardware erworben werden muss. Darüber hinaus sind weiterhin Aktivitäten des Nutzers erforderlich (Übernehmen der Daten am Router auf das Speichermedium und Einspielen in den Client). Weitere Clients können nur über weitere zusätzliche Hardware in das Netzwerk eingebunden werden.

Berechnete Schlüssel stellen ein massives Sicherheitsrisiko dar, sobald der Algorithmus bekannt wird.

Der Erfindung liegt nun die Aufgabe zugrunde, ein Verfahren zum Zugang zu und zur Verschlüsselung von (Drahtlos-) Netzwerken zu schaffen, das mit geringem Aufwand eine deutlich verbesserte Bedienbarkeit gewährleistet und eine hohe Sicherheit für das Netzwerk bietet.

Die der Erfindung zugrunde liegende Aufgabe wird gelöst durch Festlegen eines individuellen komplexen Schlüssels (bestehend aus Netzwerkkennung und/oder Passwort), Einprogrammieren dieses Schlüssels in der Router-Hardware, Speichern des Schlüssels auf einem individualisierten Datenträger, der zugleich die Installationssoftware für den (W)LAN-Client beinhaltet, und automatische Übernahme des im individualisierten Datenträger gespeicherten Schlüssels in die Netzwerkeinstellungen des Client-Rechners.

Bevorzugt wird als Datenträger eine entsprechend programmierte CD, DVD, USB-Memory-Stick, Speicherkarte o.ä. verwendet, wobei der Schlüssel als Barcode und/oder als Klartext auf dem Datenträger aufgebracht wird.

In Fortführung der Erfindung wird der Schlüssel vom Datenträger abgelesen (eingescannt) und permanent im (WLAN-) Router gespeichert.

In einer Variante der Erfindung wird der der Schlüssel optional als Barcode und/oder als Klartext auf den Router aufgebracht.

In Fortführung der Erfindung wird der Router gemeinsam mit dem passenden Datenträger zur Auslieferung gebracht.

In einer weiteren Ausgestaltung der Erfindung wird der WLAN-Key als Bestandteil des Schlüssels aufgenommen.

Zusätzlich kann als weiterer Bestandteil des Schlüssels die Netzwerkkennung (SSID) aufgenommen werden.

Eine weitere besondere Ausgestaltung der Erfindung ist dadurch gekennzeichnet, dass eine Tabelle mit gewünschten Paarungen aus Netzwerkkennung (SSID) und zugehörigem individuellen komplexen Schlüssel (WLAN Key) erzeugt und in einem Speicher abgelegt wird und dass bei der Herstellung der Installations-CD's zur Installationssoftware jeweils eine individuelle Paarung SSID-WLAN Key eingebrannt wird, wobei die Installationssoftware für alle CD's identisch ist.

Die Paarung Router-Datenträger ist unikal, d.h., im Fertigungsprozess wird sichergestellt, dass jeder generierte Schlüssel nur auf einem individualisierten Datenträger und passend dazu auf nur einem Router einprogrammiert wird. Die Router werden dann gemeinsam mit dem passenden Datenträger zur Auslieferung gebracht.

Die Erfindung gewährleistet eine komfortable, fehlerfreie Nutzerführung, da der Installations- und Konfigurationsassistent, nachdem er vom Datenträger gestartet wurde, alle Einstellungen ohne weitere Eingaben durch den Nutzer automatisch ausführen kann. Die erforderlichen Sicherheitseinstellungen werden direkt vom Datenträger ausgelesen und im (WLAN-) Client korrekt eingestellt.

Der voreingestellte unikale Schlüssel bietet eine maximale Netzwerksicherheit, ohne dass der Nutzer fehlerträchtige Eingaben komplexer Schlüssel selbst vornehmen muss. Es besteht auch keine Notwendigkeit, den Schlüssel zu ändern, da der gelieferte komplexe Schlüssel absolut individuell und sicher ist und eine Nachberechnung desselben ausgeschlossen ist. Ein Zeitfenster mit "offenem" (nicht verschlüsseltem) (W)LAN wird vermieden, woraus eine höhere Sicherheit als bei WPS gewährleistet wird. Der bei anderen Verfahren erforderliche manuelle Eingriff am (WLAN-) Router entfällt ganz.

Die Installation erfolgt mit einem Standarddatenträger in der dem Nutzer bereits aus anderen Installationen bekannten Vorgehensweise. Es ist folglich keine Hemmschwelle beim Nutzer zu befürchten, dieses Verfahren zu nutzen.

Weitere Clients können mit dem gleichen Datenträger in gleicher Weise in das Netz eingebunden werden.

Zusätzliche, ggf. überflüssige (W)LAN-Hardware am Client wird nicht erforderlich, da ausschließlich Standardkomponenten zum Einsatz kommen und -wenn vorhanden- die (W)LAN-Hardware nur passend konfiguriert wird.

Die Erfindung soll nachfolgend an einem Ausführungsbeispiel für WLAN näher erläutert werden.

Die Erfindung umfasst die Schritte des Festlegens eines individuellen komplexen Schlüssels, das Speichern dieses Schlüssels auf einem individualisierten Datenträger (entsprechend programmierte CD, DVD, USB-Memory-Stick o.ä.), der zugleich die Installationssoftware für den (WLAN-) Client beinhalten kann, des Aufbringens (z.B. durch Aufdruck) eines zum Schlüssel passenden Barcode auf dem Datenträger, z.B. durch Aufdrucken. Nachfolgend wird der Barcode vom Datenträger eingescannt und dieser Schlüssel in den (WLAN-) Router während der Herstellung des Routers einprogrammiert.

Es wird eine Tabelle mit gewünschten Paarungen aus Netzwerkkennung (SSID) und zugehörigem individuellen komplexen Schlüssel (WLAN Key) erzeugt. Der Schlüssel wird NICHT berechnet, sondern wird nach aktuellen Vorschriften für die Sicherheit von Netzwerkschlüsseln zufällig erzeugt.

Bei der Herstellung der Installations-CD's wird zur - für alle CD's identischen - Installationssoftware jeweils eine individuelle Paarung SSID-WLAN Key eingebrannt. Die CD erhält einen individuellen Aufdruck mit SSID und WLAN Key in Klartext und als Barcode.

In der Herstellung der WLAN-Router wird bei der Erzeugung des elektronischen Typschildes der Barcode der CD eingescannt und die passende Paarung SSID-WLAN Key im WLAN- Router eingespeichert.

CD und WLAN-Router werden anschließend gemeinsam in eine Lieferverpackung verpackt.

Der Kunde installiert (elektrisch) den WLAN-Router, legt an seinem Client-PC die Installations-CD ein und installiert bei Bedarf die Treibersoftware für den WLAN-Client. Die dazu erforderlichen Sicherheitseinstellungen (SSID und WLAN Key) liest der Installations- und Konfigurationsassistent direkt vom Datenträger; der Kunde muss nur die Übernahme bestätigen, um eine gesicherte Verbindung zwischen WLAN- Router und WLAN- Client herzustellen. Weitere PC's lassen sich auf die gleiche Weise komfortabel ins WLAN einbinden.

## Patentansprüche

1. Verfahren zum Zugang zu und zur Verschlüsselung von Netzwerken, insbesondere von Drahtlosnetzwerken, wie WLAN-Netzwerken, **gekennzeichnet durch**, Festlegen eines individuellen komplexen Schlüssels, bestehend aus Netzwerkkennung (SSID) und/oder Passwort, Einprogrammieren dieses Schlüssels in der Router- Hardware, Speichern des Schlüssels auf einem individualisierten Datenträger, der zugleich die Installationssoftware für den (W)LAN-Client beinhaltet, sowie automatische Übernahme des im individualisierten Datenträger gespeicherten Schlüssels in die Netzwerkeinstellungen des Client-Rechners.

2. Verfahren nach Anspruch 1, **dadurch gekennzeichnet, dass** als Datenträger eine entsprechend programmierte CD, DVD, USB-Memory-Stick, Speicherkarte o.ä. verwendet wird.

3. Verfahren nach Anspruch 1 und 2, **dadurch gekennzeichnet, dass** der Schlüssel als Barcode und/oder als Klartext auf dem Datenträger aufgebracht wird.

4. Verfahren nach Anspruch 1 bis 3, **dadurch gekennzeichnet, dass** der Schlüssel vom Datenträger abgelesen (eingescannt) und permanent im (WLAN-) Router gespeichert wird.

5. Verfahren nach Anspruch 1 bis 4, **dadurch gekennzeichnet, dass** optional der Schlüssel als Barcode und/oder als Klartext auf den Router aufgebracht wird.

6. Verfahren nach Anspruch 1 bis 5, **dadurch gekennzeichnet, dass** der Router gemeinsam mit dem passenden Datenträger zur Auslieferung gebracht wird.

7. Verfahren nach Anspruch 1 bis 6, **dadurch gekennzeichnet,** das ein Bestandteil des Schlüssels der WLAN-Key ist.

8. Verfahren nach Anspruch 1 bis 7, **dadurch gekennzeichnet, dass** ein weiterer Bestandteil des Schlüssels die Netzwerkkennung (SSID) ist.

9. Verfahren nach Anspruch 1, **dadurch gekennzeichnet, dass** eine Tabelle mit gewünschten Paarungen aus Netzwerkkennung (SSID) und zugehörigem individuellen komplexen Schlüssel (WLAN Key) erzeugt und in einem Speicher abgelegt wird und dass bei der Herstellung der Installations-CD's zur Installationssoftware jeweils eine individuelle Paarung SSID-WLAN Key eingebrannt wird.

10. Verfahren nach Anspruch 9, **dadurch gekennzeichnet, dass** die Installationssoftware für alle CD's identisch ist.

## Geänderte Patentansprüche

### Geänderte Patentansprüche gemäss Regel 137(2) EPÜ.

**1.** Verfahren zum Zugang zu und zur Verschlüsselung von Netzwerken, insbesondere von Drahtlosnetzwerken, wie WLAN-Netzwerken, **gekennzeichnet durch**,
- Festlegen eines individuellen komplexen Schlüssels, bestehend aus Netzwerkkennung, dem SSID und/oder Passwort, ,
- herstellerseitiges Speichern des Schlüssels auf einem individualisierten Datenträger, der zugleich die Installationssoftware für den WLAN- bzw. LAN- Client beinhaltet,
- Aufbringen eines zum Schlüssel passenden Barcodes auf dem Datenträger,
- Einscannen des Barcodes vom Datenträger und permanentes Einprogrammieren dieses Schlüssels in der WLAN-Router- Hardware während der Herstellung des Routers und
- automatische Übernahme des im individualisierten Datenträger gespeicherten Schlüssels in die Netzwerkeinstellungen des Client- Rechners.

**2.** Verfahren nach Anspruch 1, **dadurch gekennzeichnet, dass** als Datenträger eine entsprechend programmierte CD, DVD, USB- Memory- Stick, Speicherkarte o.ä. verwendet wird.

**3.** Verfahren nach Anspruch 1 und 2, **dadurch gekennzeichnet, dass** der Schlüssel als Barcode und/oder als Klartext auf den Router aufgebracht wird.

**4.** Verfahren nach Anspruch 1 bis 3, **dadurch gekennzeichnet, dass** der Router gemeinsam mit dem passenden Datenträger zur Auslieferung gebracht wird.

**5.** Verfahren nach Anspruch 1 bis 4, **dadurch gekennzeichnet**, das ein Bestandteil des Schlüssels der WLAN- Key ist.

**6.** Verfahren nach Anspruch 1 bis 5, **dadurch gekennzeichnet, dass** ein weiterer Bestandteil des Schlüssels die Netzwerkkennung ist.

**7.** Verfahren nach Anspruch 1, **dadurch gekennzeichnet, dass** eine Tabelle mit gewünschten Paarungen aus Netzwerkkennung, d.h. dem SSID und zugehörigem individuellen komplexen Schlüssel, d.h. dem WLAN Key, erzeugt und in einem Speicher abgelegt wird und dass bei der Herstellung der Installations- CD's zur Installationssoftware jeweils eine individuelle Paarung SSID-WLAN Key eingebrannt wird.

**9.** Verfahren nach Anspruch 7, **dadurch gekennzeichnet, dass** die Installationssoftware für alle CD's identisch ist.
